# EUROPÄISCHE PATENTANMELDUNG

(11) **EP 1 403 647 A2**
(43) Veröffentlichungstag der Anmeldung: **31.03.2004**
(21) Anmeldenummer: 03010893.0
(22) Anmeldetag: 15.05.2003
(51) Int. Cl.: G01P 15/00

(54) **Ortsfest zu betreibendes Gerät**

(30) Priorität: 16.05.2002 DE 20207700 U
(71) Anmelder: Firma kickWare OHG, 97228 Rottendorf (DE)
(72) Erfinder: Eckert, Frank, 97228 Rottendorf (DE)
(74) Vertreter: Küchler, Stefan

(57) **Zusammenfassung**

Die Erfindung richtet sich auf ein ortsfest betreibbares Gerät mit einem Gehäuse, einem Lautsprecher und einem an dem Gerät angeordneten Sensor für die Sensierung äußerer Einflüsse, welcher mit dem Lautsprecher derart gekoppelt ist, dass äußere, auf das Gerät einwirkende Einflüsse eine Veränderung der Tonwiedergabe herbeiführen, sowie auf ein Verfahren zum Betrieb eines derartigen Geräts; das Gehäuse ist mit einem Standfuß, dem eigentlichen Gerät oder einem sonstigen Gegenstand gekoppelt, so dass es unter einem äußeren Einfluß aus seiner ortsfesten Ausgangslage ausweichen kann; ferner ist eine Rückführ- oder Stabilisierungseinrichtung für das Gehäuse vorhanden; der Sensor ist zur Erfassung einer Auslenkung des Gehäuses aus dessen ortsfester Ausgangslage oder zur Erfassung von deren Geschwindigkeit oder Beschleunigung ausgebildet; die Beschleunigung oder Schwingungen des Gehäuses oder die auf dieses ausgeübte Kraft wird gemessen, um in Abhängigkeit von den gemessenen Werten unterschiedliche Tonsequenzen wiederzugeben.

## Beschreibung

Die Erfindung richtet sich auf ein ortsfest zu betreibendes Gerät, insbesondere ein Elektrogerät wie bspw. ein Computer, mit wenigstens einem Gehäuse, einer Einrichtung zur Wiedergabe von Tönen, insbesondere in Form eines Lautsprechers, und mit einem an dem Gerät angeordneten Sensor für die Sensierung äußerer Einflüsse, welcher mit der Tonwiedergabeeinrichtung derart gekoppelt ist, dass äußere, auf das Gerät, insbesondere auf dessen Gehäuse, einwirkende Einflüsse eine Veränderung der Tonwiedergabe herbeiführen.

Eine gattungsgemäße Anordnung ist aus der deutschen Patentschrift 41 10 704 C2 bekannt. Dort ist das Gehäuse eines Rundfunkempfängers mit einem Gyrator gekoppelt. Dieser sensiert Bewegungen des Gehäuses und ist mit einem Zufallsgenerator gekoppelt, um über diesen ein Umschalten auf eine andere Sendefrequenz zu veranlassen oder eines von mehreren, auf einem Rekorder abgespeicherten Audiosignalen abzuspielen od. dgl. Hier wird demnach das gesamte Gerät bewegt, während der Gyrator eine Lageorientierung erkennen kann. Da das Gerät nicht von selbst in seine Ausgangsposition zurückzukehren vermag, verharrt es nach dem Auslösen einer Reaktion an einer anderen Position, so dass sich einerseits die Empfangseigenschaften wie bspw. die Empfangsfeldstärke und andererseits die Wiedergabeeigenschaften wie insbesondere die Akustik, etc., im Laufe mehrerer Bewegungsvorgänge erheblich verändern und insbesondere verschlechtern können. Da ein Gyrator nur Veränderungen der Lage im Raum (Rotationsbewegungen) sensieren kann, nicht dagegen reine Translationsbewegungen, ist es dem Gerät nicht möglich, den Zustand einer etwa gleichförmigen Translationsbewegung zu erkennen und vom eigenen Stillstand zu unterscheiden. Mangels einer Kenntnis des eigenen Zustands kann das Gerät keine "typischen" Reaktionen zeigen, sondern sich nur vage äußern; dieser Effekt wird noch verstärkt durch die Zwischenschaltung eines Zufallsgenerators zur Auswahl einer Reaktion.

Aus diesen Nachteilen des bekannten Stands der Technik resultiert das die Erfindung initiierende Problem, ein gattungsgemäßes Gerät derart weiterzubilden, dass das Gerät auf äußere Einflüsse sinnvoll antworten kann.

Die Lösung dieses Problems gelingt bei einem gattungsgemäßen Gerät durch die folgenden Merkmale:
a) das Gehäuse ist mit wenigstens einem Standfuß, mit dem eigentlichen Gerät, insbesondere dessen Chassis, und/oder mit einem sonstigen Gegenstand, bspw. einem Möbel oder einem Türblatt, gekoppelt oder koppelbar, derart, dass das Gehäuse unter einem äußeren, insbesondere mechanischen Einfluß, der auf das Gehäuse selbst oder den dieses lokalisierenden Gegenstand einwirkt, aus seiner ortsfesten Ausgangslage ausweichen kann;
b) das Gehäuse ist mit einer Rückführeinrichtung und/oder einer Stabilisierungseinrichtung, bspw. einer Einrichtung zur Dämpfung von Schwingungen, versehen oder gekoppelt, die bestrebt ist, dieses nach Wegfall äußerer Einflüsse in eine stabile Position zu bewegen und/oder lagemäßig zu stabilisieren;
c) der Sensor ist zur Erfassung einer Auslenkung x des Gehäuses aus dessen ortsfester Ausgangslage, und/oder zur Erfassung der Geschwindigkeit v = dx/dt der Auslenkung x und/oder deren Beschleunigung a = d²x/dt² und/oder einer dazu proportionalen Größe, insbesondere einer auf das Gehäuse (1;40) ausgeübten Kraft F = m*a, ausgebildet.

Aufgrund der rückstellenden oder stabilisierenden Kraft erfolgt nach Wegfall einer äußeren Einwirkung eine Bewegungs- oder Reaktionsumkehr bzw. Beruhigung, so dass dem Gerät die Möglichkeit eröffnet ist, den Wegfall eines äußeren Einflusses erkennen zu können. Es weiß also, wann eine Antwort erwartet wird. Außerdem kann das Gerät durch Aufzeichnung des zeitlichen Bewegungshergangs eine Auswertung vornehmen, um die Heftigkeit einer äußeren Einwirkung feststellen und sodann geeignet antworten zu können.

Dabei dient als Maßstab zur Bestimmung der Vehemenz der äußeren Einwirkung die resultierende, mechanische Reaktion, welche das Gerätegehäuse unter dem Zusammenwirken der gegeneinander arbeitenden inneren und äußeren Kräfte erfährt. Alle diese Informationen erhält das erfindungsgemäße Gerät, ohne sich dabei auf Dauer von seinem Platz zu bewegen oder eine bleibende Veränderung seiner Ausrichtung im Raum zu erfahren bzw. von einem verankernden Gegenstand zu lösen.

Im Rahmen einer ersten Ausführungsform verfügt die Kopplung des Gehäuses über formschlüssig ineinander greifende Elemente, bspw. Klettverschlüsse, Druckknöpfe, Häken, etc. Damit kann das Gerät an einem Gegenstand befestigt bzw. verankert werden, bspw. an einem anderen Gerät, einem Möbel, einer Tür od. dgl. und spürt sodann sämtliche äußeren Einflüsse, welchen der verankernde Gegenstand ausgesetzt ist. Ist das Gerät bspw. an einem Türblatt festgelegt, so kehrt es bspw. nach jedem Schließen der Tür in eine definierte Ausgangslage zurück. Aber auch bei offen stehender Tür klingen Schwingungen und sonstige Vibrationen des Türblattes rasch ab, welche mit einer jeden Bewegung ansonsten untrennbar verbunden sind, und daraus kann das erfindungsgemäße Gerät den aktuellen Zustand des Türblattes zweifelsfrei ermitteln.

Die Kopplung des Gehäuses mit einem Standfuß, mit dem eigentlichen Gerät und/oder mit einem sonstigen Gegenstand kann darüber hinaus auch beweglich ausgestaltet sein, so dass eine Relativbewegung zwischen dem Gehäuse und einem Bezugsgegenstand möglich ist. Eine solcher Freiheitsgrad der Bewegung erlaubt insbesondere Rückschlüsse auf äußere Einflüsse, welche direkt auf das betreffende Gehäuse einwirken, weil die daraus resultierenden Bewegungen von einem Sensor erfaßbar sind.

Es hat sich als günstig erwiesen, dass die bewegliche Kopplung des Gehäuses ein oder mehrere Linearführungselemente umfaßt. Diesen Elementen obliegt es, dem Gehäuse einen definierten Bewegungsspielraum zu schaffen, um auf die verschiedensten Einflüsse mit "genormten" und damit meßbaren Bewegungen reagieren zu können. Dabei ist es auch möglich, in begrenztem Umfang Querbewegungen zuzulassen, um bspw. einem Verklemmen od. dgl. entgegenzuwirken. An einem Standfußelement können mehrere, bspw. zwei solcher Standfüße mit je einem Linearührungselement zusammengefaßt sein, so dass sich mit zwei derartigen Standfußelementen für das Gehäuse insgesamt wenigstens vier Aufstandspunkte auf dem Boden ergeben. Dabei können die Linearführungen entweder allesamt parallel zueinander angeordnet sein, oder bspw. gegenüber dem jeweils gemeinsamen Standfußelement geneigt, insbesondere derart, dass sie in Richtung von dem Gehäuse zum Boden auseinander divergieren, wodurch sich eine besonders hohe Stabilität ergibt.

Um den Bewegungsspielraum zu begrenzen, kann die bewegliche Kopplung des Gehäuses mit ein oder mehreren Anschlagelementen versehen sein. Diese sollen vor allem eine Überbeanspruchung von Teilen der beweglichen Kopplung, insbesondere eine Überdehnung einer oder mehreren Rückstellfedern, vermeiden.

Die Erfindung sieht weiterhin vor, dass die Rückführ- und/oder Stabilisierungseinrichtung des Gehäuses ein oder mehrere Feder- und/oder Dämpfungselemente aufweist, um das Gehäuse in von äußeren Kräften freiem Zustand an eine definierte Position zu bewegen und/oder stillzusetzen. Derartige Federelemente bieten den zusätzlichen Vorteil, dass ihre rückstellende Tendenz mit zunehmender Auslenkung immer stärker wird, so dass anhand der maximalen Auslenkung bspw. die äußere, verursachende Kraft bestimmt werden kann. Mit Dämpfungselementen kann erreicht werden, dass das Gehäuse nach einer äußerlichen Anregung nicht lange nachschwingt, um den Wegfall des äußeren Einflusses schnell erkennen zu können.

Es liegt im Rahmen der Erfindung, dass der Sensor als Beschleunigungssensor ausgebildet und in oder an dem beweglichen Gehäuse angeordnet ist. Mit der von einem derartigen Sensor gemessenen Beschleunigung a läßt sich die zu Beginn einer Auslenkung wirkende Kraft nach dem Gesetz F = m*a ermitteln, also bspw. die Wucht eines Stoßes, wobei für m etwa die Masse des bewegten Gehäuses einzusetzen ist.

Andererseits ist es auch möglich, dass der Sensor als Kraft- oder Drucksensor ausgebildet und an der beweglichen Kopplung des Gehäuses angeschlossen ist. Er kann solchenfalls bspw. die Druckkraft direkt messen, die auf ein federndes Element einwirkt. Da der von einem Federelement erzeugte Gegendruck mit dessen Verformung ansteigt, wird hier das Maximum etwa gleichzeitig mit der Bewegungsumkehr erreicht, also bei nachlassender äußerer Kraft F.

Ein wiederum anderer Sensor ist als Meßeinrichtung für die Spannkraft oder Auslenkung x eines oder mehrerer Federelemente der beweglichen Kopplung des Gehäuses ausgebildet. Es kann sich hierbei um eine Wegmeßeinrichtung handeln, welche die Auslenkung x erfaßt. Infolge der wegproportionalen Rückstellkraft der Federelemente ist die maximale Auslenkung xₘₐₓ ein Maß für eine äußere Kraft F.

Vorzugsweise ist der Sensor zur Erzeugung eines kontinuierlichen Ausgangssignals ausgebildet, damit eine Information über den Grad einer äußeren Einwirkung generiert wird, der zur Auswahl einer entsprechenden Antwort herangezogen werden kann.

An dem Sensor kann eine Auswerteschaltung angeschlossen sein, bspw. um den Maximalwert des Ausgangssignalverlaufs innerhalb eines Zeitintervalls zu ermitteln. Bei allen Sensortypen ist im Fall eines Stoßes die maximale Amplitude des Ausgangssignals charakteristisch für dessen Wucht. Andererseits wird das Gehäuse durch die Rückstelleinrichtung an einem bleibenden Ausweichen gehindert, so dass jede (die Haftreibung eines auf dem Boden stehenden Geräteteils nicht überschreitende Bewegung) ein Ende findet und daher bei allen Sensortypen eine Umkehr des Signalverlaufs bedingt. Dies wiederum führt zu einem relativ genau bestimmbaren Maximalwert.

Insbesondere bei Verwendung von Kraft- und Wegaufnehmern sollte die Auswerteschaltung derart ausgebildet sein, dass das Sensorsignal u zeitdiskret abgetastet wird, bspw. zu äquidistanten Zeitpunkten tₙ, wobei aufeinanderfolgende Abtastwerte uₙ des Ausgangssignals u sodann miteinander verglichen werden, um den charakteristischen Maximalwert uₘₐₓ zu erkennen, bspw. durch Differenzbildung jeweils aufeinanderfolgender Meßwerte dₙ = uₙ - uₙ₋₁. Ein dynamischer Nulldurchgang des Differenzsignals dₙ (nicht ein statischer Nullwert d = 0), insbesondere bei dₙ < dₙ₋₁, d.h., dₙ < 0 ≤ dₙ₋₁, zeigt das Maximum des betreffenden Signals uₘₐₓ an und kann als Triggersignal zur Auslösung einer Reaktion verwendet werden, wobei der zu dem betreffenden Zeitpunkt absolut gemessene Signalwert, also der Maximalwert uₘₐₓ, als Parameter zur Bestimmung der richtigen Antwort dient und zu diesem Zweck einem vorgegebenen Bereich zugeordnet wird, um die für den betreffenden Bereich vorgesehene Tonsequenz auszuwählen und sodann abzuspielen.

Das erfindungsgemäße Gerät ermöglicht, die Beschleunigung, Geschwindigkeit oder Auslenkung des Gehäuses und/oder die auf dieses ausgeübte Kraft zu messen , wobei in Abhängigkeit von den gemessenen Werten unterschiedliche Signale abgegeben, insbesondere Tonsequenzen wiedergegeben werden können. Damit werden die unterschiedlichsten mechanischen Einwirkungen einklassifiziert, um eine verblüffende Antwort zu geben, weil diese (ähnlich wie bei einer Person) hinsichtlich der Ursache differenziert ist. Sofern die Antwort darüber hinaus aus einem oder mehreren gesprochenen oder gerufenen Worten besteht, ist der Effekt einer Personifizierung des betreffenden Geräts perfekt.

Die Auswerteschaltung läßt sich solchermaßen ausbilden, dass der Maximalwert des Ausgangssignalverlaufs über ein (kurzes) Zeitintervall hinweg ermittelt wird, um Signalschwingungen kleiner Amplituden, bspw. Vibrationen durch vorbeifahrende Lastkraftwagen, etc., ggf. herauszufiltern und von tatsächlichen, d.h. gezielt das Gerät betreffenden Einwirkungen zu unterscheiden. Hierzu genügt bspw. ein Zeitintervall in der Größenordnung von 1 Sekunde.

Schließlich entspricht es der Lehre der Erfindung, die Auswerteschaltung derart zu konstruieren, dass je nach dem zugeordneten Amplitudenbereich unterschiedliche Tonsequenzen aus einem Speicher ausgelesen und über einen Lautsprecher hörbar gemacht werden. Hierbei kann eine Aufnahmefunktion vorgesehen sein, so dass der Inhaber eines Geräts verschiedene Reaktionssätze oder -geräusche selbst aufsprechen kann. Andererseits ist es auch möglich, in einem Speicher eine Vielzahl von Sätzen und Stimmen bereitzuhalten und bspw. nach Art des betreffenden Geräts oder nach dem Geschmack seines Besitzers wiederzugeben.

Das erfindungsgemäße Verfahren zum Betrieb eines oben beschriebenen Geräts sieht vor, dass die Beschleunigung und/oder Schwingungen des Gehäuses und/oder die auf dieses ausgeübte Kraft gemessen wird, und dass in Abhängigkeit von den gemessenen Werten unterschiedliche Tonsequenzen wiedergegeben werden.

Dabei kann insbesondere der Maximalwert des Ausgangssignalverlaufs innerhalb eines Zeitintervalls ermittelt werden, indem aufeinanderfolgende Abtastwerte des Ausgangssignals miteinander verglichen werden. Die Amplitude kann anhand des so erkannten Maximalwerts einem von mehreren Amplitudenbereichen zugeordnet werden, und je nach dem zugewiesenen Amplitudenbereich werden sodann unterschiedliche Tonsequenzen aus einem Speicher ausgelesen und über einen Lautsprecher hörbar gemacht. Ebenfalls in Abhängigkeit von dem zugeordneten Amplitudenbereich lassen sich unterschiedliche oder eine unterschiedliche Anzahl von optischen Signalelementen, insbesondere Leuchtmitteln, ansteuern, um dadurch die Stärke der Einwirkung auch optisch anzuzeigen. Wenn die verschiedenen Leuchtmittel dabei in einer Reihe angeordnet sind, ergibt sich etwa der Effekt einer Leuchtbalkenanzeige.

Weitere Merkmale, Einzelheiten, Vorteile und Wirkungen auf der Basis der Erfindung ergeben sich aus der folgenden Beschreibung bevorzugter Ausführungsbeispiele der Erfindung sowie anhand der Zeichnung. Hierbei zeigt:
- Fig. 1: eine Vorderansicht auf eine erste Ausführungsform der Erfindung;
- Fig. 2: eine Unteransicht auf die Fig. 1 in Richtung des Pfeils II;
- Fig. 3: das Detail III aus Fig. 1 in einer größeren Darstellung sowie im Schnitt;
- Fig. 4: ein den Aufbau und die Funktion der Auswerteschaltung der ersten Ausführungsform der Erfindung erläuterndes Schaubild;
- Fig. 5: eine Vorderansicht auf eine zweite Ausführungsform der Erfindung;
- Fig. 6: eine Seitenansicht auf die Fig. 5, teilweise abgebrochen; sowie
- Fig. 7: eine perspektivische Darstellung einer wiederum abgewandelten Ausführungsform der Erfindung für die Befestigung an einem Gegenstand.

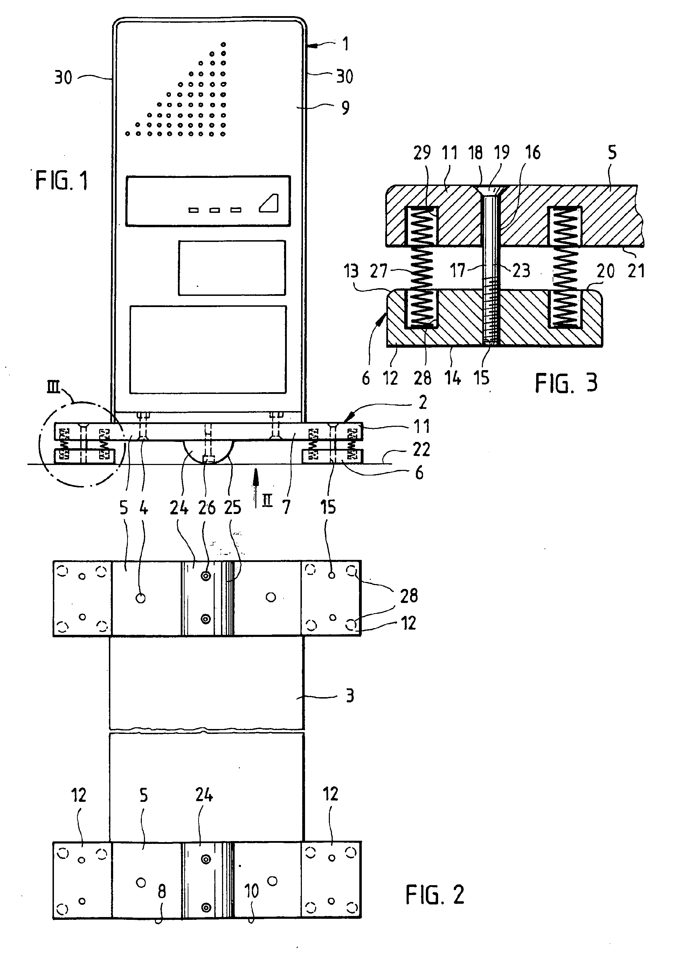

Bei der ersten Ausführungsform, die in den Fig. 1 bis 3 wiedergegeben ist, wird ein Original-Computergehäuse 1 verwendet und zur Herbeiführung eines akustischen Reaktionsvermögens auf äußere Einwirkungen mit einer erfindungsgemäßen Mechanik 2 einerseits und einer im Gehäuseinneren angeordneten Sensorik und Elektronik andererseits ausgerüstet.

Die Mechanik 2 umfaßt zwei identische, an dem Unterboden 3 des Computergehäuses 1 festschraubbare 4 Balken 5 mit jeweils zwei Standfüßen 6. Die beiden Balken 5 verlaufen quer zu der Längsrichtung des Gehäuses 1; jeweils einer der beiden Balken 5 ist schließt mit seiner vorderen bzw. rückwärtigen Längsseite 7, 8 mit der Vorderseite 9 bzw. mit der Rückseite 10 des Gehäuses 1 etwa bündig ab, könnte jedoch auch um ein mehr oder weniger großes Maß überstehen oder zurückversetzt sein. Die Länge jedes Balkens 5 entspricht etwa der Summe der Breiten des Computergehäuses 1 sowie der beiden Standfüße 6, könnte jedoch insbesondere auch noch länger sein. Jeder Balken 5 ist symmetrisch zu der vertikalen Längs-Mittelebene des Computer-Gehäuses 1 an diesem festgeschraubt 4 und ragt daher zu beiden Seiten des Gehäuses 1 gleichmäßig über; unterhalb der überstehenden Bereiche 11 ist jeweils ein Standfuß 6 angeordnet.

Jeder Standfuß 6 umfaßt eine quadratische oder rechteckige Platte 12, die wie auch die Balken 5 aus einem steifen Werkstoff, bspw. Metall, Holz oder einem festen Kunststoff, insbesondere Acrylglas, gefertigt ist. Jede Platte 12 hat eine etwa quaderförmige Gestalt mit angefaster Oberkante 13 und einer Grundfläche 14, die etwa einem überstehenden Flächenbereich 11 eines Balkens 5 entspricht. Etwa rechtwinklig zu dieser Grundfläche 14 ist die Platte 12 von zwei Bohrungen 15 vollständig durchsetzt, die mit jeweils einer Bohrung 16 des etwa deckungsgleich darüber liegenden, überstehenden Bereichs 11 fluchten. Jeweils zwei miteinander fluchtende Bohrungen 15, 16 nehmen eine Schraube 17 auf. Dabei sind die Plattenbohrungen 15 mit einem zu der Schraube 17 passenden Innengewinde versehen; während die Balkenbohrungen 16 an ihrer Oberseite eine bspw. kegelförmige Einsenkung 18 aufweisen, worin gerade der Kopf 19 einer Senkkopfschraube 17 Platz findet. Wird je eine derartige Schraube 17 durch eine Balkenbohrung 16 hindurch in die darunterliegende Plattenbohrung 15 geschraubt, so ist eine seitliche Versetzung der betreffenden Standfuß-Platte 12 gegenüber dem Balken 5 nicht mehr möglich, jedoch noch eine vertikale Relativbewegung infolge einer Schraubenlänge, die größer ist als die Summe der Stärken von Balken 5 und Platte 12 einerseits, sowie infolge eines mangelnden Gewindes im Bereich des Balkens 5 andererseits. Eine derartige Relativbewegung wird allerdings begrenzt durch das Anliegen der Plattenoberseite 20 an der Balkenunterseite 21 einerseits sowie durch das vollständige Eintauchen des Schraubenkopfs 19 in die dafür vorgesehene Einsenkung 18 andererseits.

Der Balken 5 und damit das Computergehäuse 1 kann demnach gegenüber den auf dem Boden 22 aufstehenden Standfuß-Platten 12 eine begrenzte Vertikalbewegung ausführen entsprechend des von der freien Schaftlänge 23 der Schraube 17 tolerierten Spielraums. Diese Bewegungsmöglichkeit wird weiter eingeschränkt durch je einen zentralen Mittelfuß 24 unter den beiden Balken 5. Diese Mittelfüße 24 haben eine ebene Oberseite und eine quer zur vertikalen Längsmittelebene des Computergehäuses 1 konvex gewölbte Unterseite 25, können ansonsten jedoch als in Längsrichtung des Computergehäuses 1 verlaufende Profile ausgebildet sein; die bevorzugte Gestalt entspricht einer entlang einer Längsmittelebene halb auseinandergeschnittenen Rundstange von einer Länge, welche etwa gleich der Breite eines Balkens 5 ist. Die Höhe eines Mittelfußes 24, bei einer halbzylindrischen Querschnittsform der Radius des betreffenden Zylinders, entspricht etwa der Summe aus der Stärke einer Standfußplatte 12 und des durch die freie Schaftlänge 23 einer Schraube 17 definierten, vertikalen Bewegungsspielraums, oder ist etwas kleiner als diese Summe. Die Mittelfüße 24 bestehen bevorzugt aus dem selben Material wie die Balken 5 und sind mit jeweils zwei Schrauben 26 an der Balkenunterseite 21 festgeschraubt. Infolge dieser steifen Mittelfüße 24 kann das Computergehäuse 1 insgesamt nicht abgesenkt werden, sondern nur noch um die Mittelfüße 24 kippen. Infolge der Verwendung von zwei Mittelfüßen 24 ist dabei nur eine seitliche Kippbewegung möglich; soll auch eine nickende Bewegung innerhalb der Längsmittelebene möglich sein, so darf nur ein Mittelfuß verwendet werden, der dann bevorzugt etwa mittig an der Unterseite einer die beiden Balken 5 miteinander verbindenden Strebe anzuordnen wäre.

Um das Gehäuse 1 in von äußeren Kräften freiem Zustand aufzurichten, sind zwischen jedem Standfuß 6 und dem betreffenden Balken 5 vertikal wirkende Druckfedern 27 angeordnet, welche die Balken 5 gegenüber den Standfüßen 6 nach oben drücken. Damit diese Federn 27 eine wohldefinierte Position einnehmen, sind in der Oberseite 20 der Standfußplatten 12 und der Unterseite 21 der Balken 5 miteinander fluchtende Sacklochbohrungen 28, 29 angeordnet, in denen jeweils ein Ende einer Schraubenfeder 27 aufgenommen ist. Pro Standfuß 6 sind insgesamt vier Druckfedern 27 vorgesehen, die in einem vorzugsweise rechteckigen Raster angeordnet sind.

Infolge der Mechanik 2 kann das Computergehäuse 1 bei einem Stoß gegen eine Seite 30, etwa einem Fußtritt, eine vorübergehende, ausweichende Kippbewegung ausführen und wird anschließend wieder aufgerichtet. Diese Kippbewegung wird jedoch von einem innerhalb des Gehäuses 1 angeordneten Sensor erkannt. Es kann sich hierbei um einen Beschleunigungssensor handeln, dessen Ausgangssignal ein Maß für die Beschleunigung a darstellt, welcher das Gehäuse 1 bei einem Stoß ausgesetzt ist. Das Sensorausgangssignal wird einer Auswerteschaltung zugeführt, die mit einem Lautsprecher in dem Gehäuse 1 gekoppelt ist.

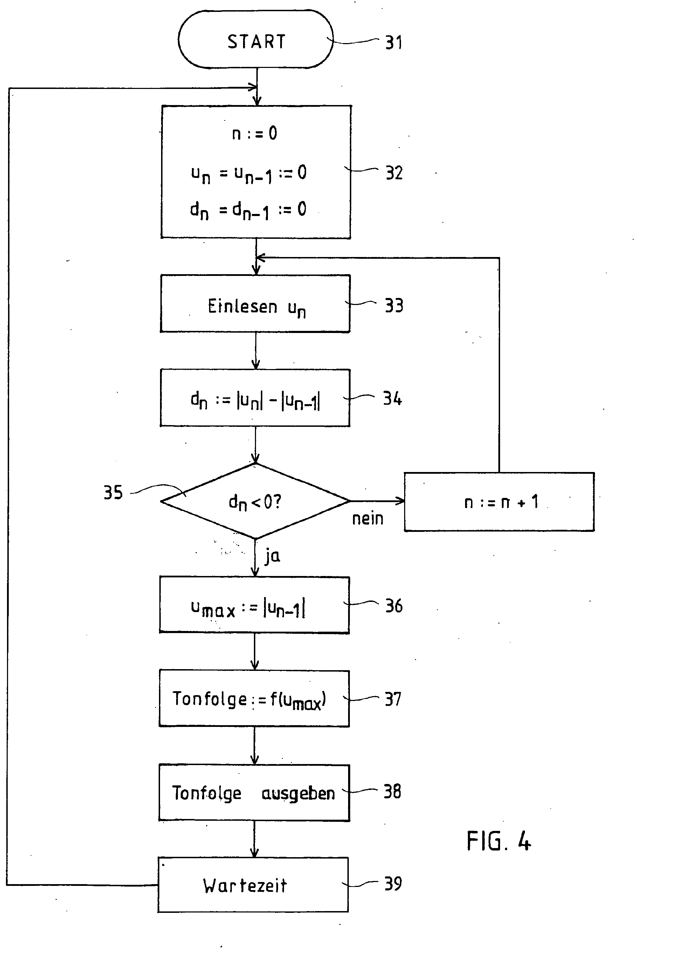

Die Auswerteschaltung ist in mehrere Funktionsblöcke untergliedert, welche nach dem in Fig. 4 dargestellten Prinzip verschalten sind bzw. zusammenwirken.

Nach Einschalten 31 des Geräts werden In einem ersten Funktionsblock 32 werden interne Parameter initialisiert, d.h. auf Null zurückgesetzt.

Sodann wird in einem weiteren Funktionsblock 33 das Ausgangssignal des Sensors abgetastet, digitalisiert und eingelesen.

In einem als Subtrahierer ausgebildeten Funktionsblock 34 wird von dem absoluten Meßwert |uₙ| der vorangehende, absolute Meßwert |uₙ₋₁| (beim ersten Durchlauf = 0) subtrahiert 34, um die Differenz dₙ := |uₙ| - |uₙ₋₁| zu ermitteln.

Bei einer anschließenden Abfrage im Rahmen eines Entscheidungsbausteins 35 stellt sich heraus, dass wegen |u₋₁| = 0 d₀ ≥ 0 ist. Damit ist der erste Rechendurchlauf abgeschlossen, und nach Inkrementieren der Zählvariable n von 0 auf 1 schließt sich die Signalverarbeitungsschleife und der Durchlauf beginnt erneut.

Ergibt sich bei einer folgenden Abfrage in dem Entscheidungsbaustein 35, dass dₙ < 0 ist, so bedeutet dies, dass erstmalig der Betrag von |uₙ| und kleiner ist als der Betrag des zuvor ermittelten Meßwerts |uₙ₋₁|, also dass der vorangehende Wert |uₙ₋₁| einen Maximalwert bildete, und deshalb wird zu einem Funktionsblock 36 verzweigt, der für die weitere Berechnung uₘₐₓ := |uₙ₋₁| setzt.

Anhand des nun bekannten Wertes von uₘₐₓ, der maximalen Beschleunigung des Gehäuses 1, wird in einem folgenden Funktionsblock 37 aus mehreren abgespeicherten Tonsequenzen eine geeignete ausgewählt, indem der Wert uₘₐₓ mittels eines oder mehrerer Komparatoren mit zuvor festgelegten Bereichsgrenzen für jede Tonsequenz verglichen wird. Da sich die unterschiedlichen Wertebereiche der einzelnen Tonsequenzen einerseits lückenlos, andererseits vorzugsweise auch nicht überlappend aneinanderreihen, existiert im allgemeinen zu jedem Maximalwert uₘₐₓ genau eine Tonsequenz. Andererseits könnte bei Überlappungen mittels eines weiteren Bausteins nach einem vorgegebenen Schema und/oder zufallsbedingt einer von mehreren Werten ausgewählt werden, während bspw. bei einem zu kleinen Maximalwert, d.h. bei kleinen Vibrationen, überhaupt keine Tonsequenz zugeordnet werden muß.

Ein evtl. als Verstärker ausgebildeter Funktionsblock 38 gibt daraufhin die gefundene Antwort über einen Lautsprecher od. dgl. aus.

Dem Verstärkerblock 38 ist ein Zeitglied 39 nachgeschaltet, welches bei oder nach der Tonausgabe gestartet wird und ein vorgegebenes oder von uₘₐₓ abhängiges Zeitintervall abwartet, um dem Gehäuse 1 Gelegenheit zum Ausschwingen zu geben. Ist dies geschehen, so schließt sich die Signalverarbeitungsschleife erneut, und der Funktionsblock 32 beginnt erneut mit dem Initialisieren der internen Parameter 32.

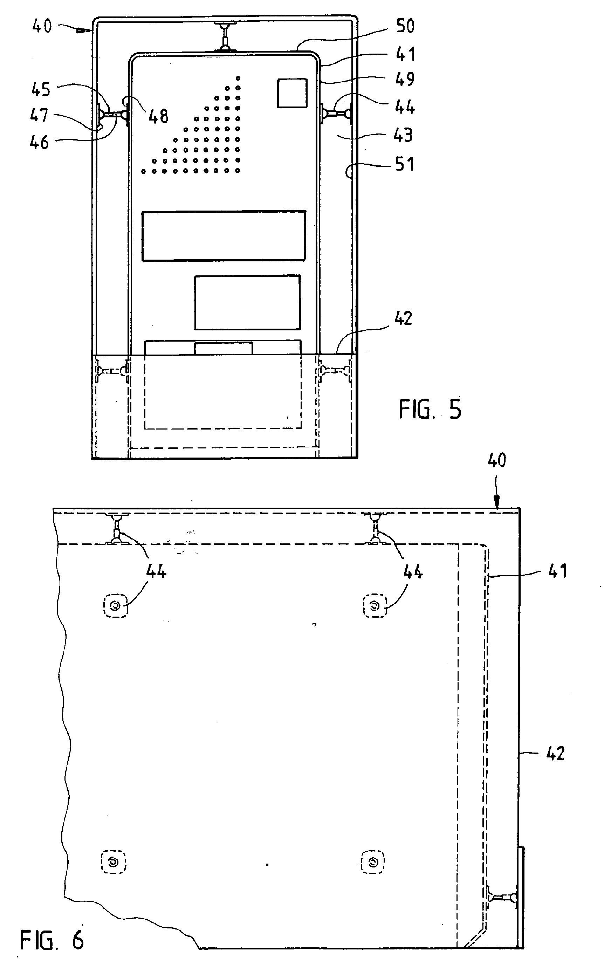

In den Fig. 5 und 6 ist eine abgewandelte Ausführungsform eines Gehäuses 40 zu sehen. Hierbei handelt es sich nicht um das eigentliche Computergehäuse 41, sondern um ein Zusatzteil, das haubenartig über das eigentliche Computergehäuse 41 stülpbar ist. Das haubenförmige Zusatzgehäuse 40 kann im Bereich seiner Vorderseite ein relativ großes Fenster 42 oder eine sonstige Aussparung aufweisen, so dass die Einrichtungen des eigentlichen Computers 41 gut erreichbar sind. Auch an der Rückseite kann ein entsprechendes Fenster zum Hindurchführen von Anschlußleitungen vorgesehen sein. Das haubenförmige Zusatzgehäuse 40 ist breiter und ggf. auch höher als das eigentliche Computergehäuse 41, so dass dazwischen ein Zwischenraum 43 verbleibt. Das haubenförmige Zusatzgehäuse muß nicht selbst auf dem Boden aufstehen, sondern kann sich vollständig an dem eigentlichen Computergehäuse 41 abstützen, insbesondere über Distanzelemente 44.

Jedes dieser Distanzelemente 44 besteht aus zwei teleskopartig ineinanderschiebbaren Schäften 45, 46, von denen jeder mit einer stirnseitigen, tellerförmigen Endplatte 47, 48 verbunden ist. Innerhalb der Schäfte 45, 46 oder dieselben umgebend ist eine auf Druck beanspruchbare Schraubenfeder angeordnet, welche die beiden Endplatten 47, 48 auseinanderdrückt.

Indem mehrere derartige Distanzelemente 44 in dem Zwischenraum 43 angeordnet sind, bspw. jeweils drei bis vier an beiden Seiten 49 des Computers 41 und eine oder zwei an dessen Oberseite 50, ist das Übergehäuse 40 federnd an dem eigentlichen Computergehäuse 41 abgestützt. Zur leichteren Installation können die Distanzelemente 44 an der Innenseite 51 des haubenförmigen Gehäuses 40 festgelegt sein.

Bei einem Stoß gegen das Übergehäuse 40 kann dieses demnach vorübergehend zurückweichen. Eine derartige Bewegung kann mittels eines oder mehrerer Bewegungssensoren ermittelt werden. Diese können als Wegaufnehmer ausgebildet und bspw. in einem Distanzelement 44 integriert sein, bspw. innerhalb der Teleskophülsen 45, 46, um Änderungen des Abstands x zwischen den betreffenden Endplatten 47, 48 zu erfassen.

Aufgrund der Schraubenfedern sind derartige Hülsenverschiebungen x proportional zu einer auf das haubenförmige Gehäuse 40 einwirkenden Kraft F gemäß dem Hook'schen Gesetz F = c*x.

Das Ausgangssignal eines derartigen Wegaufnehmers und können daher nach einem ähnlichen Prinzip wie in Fig. 4 dargestellt ausgewertet werden, um daraus den Zeitpunkt und die Art einer Antwort bspw. auf einen das Übergehäuse 40 treffenden Fußtritts od. dgl. bestimmen zu können. Da sich bei dieser Ausführungsform vor allem das Übergehäuse 40 bewegt, wird das eigentliche Gerät zusätzlich vor mechanischen Einflüssen, insbesondere Erschütterungen geschützt.

Anstelle der oben beschriebenen Wegaufnehmer können auch Drucksensoren verwendet werden, welche bspw. zwischen einem Teller 47, 48 und dem betreffenden Gehäuse 40, 41 eingefügt sind, um die auf das Gehäuse 40 einwirkende Druckkraft direkt zu messen.

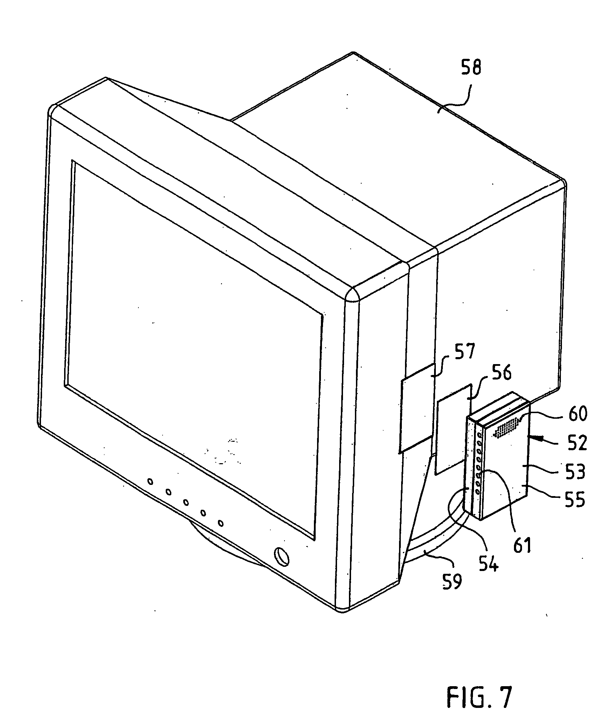

Eine wiederum abgewandelte Ausführungsform der Erfindung ist in Fig. 7 zu sehen. Das dortige, erfindungsgemäße Gerät 52 weist ein kleines, vorzugsweise quaderförmiges Gehäuse 53 auf, das nach Art eines Gehäuses für einen elektronischen Schaltkreis aus zwei zusammensetzbaren Halbschalen, bspw. einem Bodenteil 54 und einem Deckelteil 55, gebildet sein kann, die mit Schrauben oder anderen Verschlußmitteln aneinander fixierbar sind.

An der Unterseite des Bodenteils 54 ist außen ein bspw. rechteckiges Klettelement 56 festgelegt, bspw. festgeklebt, vorzugsweise derart, dass es (nahezu) die gesamte Unterseite bedeckt. Zu diesem Klettelement 56 existieren ein oder mehrere Pendants 57, vorzugsweise mit etwa deckungsgleicher Grundfläche, welche mit ihrer Rückseite an den unterschiedlichsten Gegenständen, so bspw. dem Gehäuse eines Computermonitors 58, befestigt, bspw. angeklebt werden können. Dadurch läßt sich das Gehäuse 53 mit den unterschiedlichsten Gegenständen 58 lösbar verbinden.

Dabei bilden die ineinandergreifenden Häkchen und Schlaufen der Klettelemente 56, 57 formschlüssig ineinander greifende Elemente, die das Gehäuse 53 festhalten. Andererseits sind die häkchenförmigen Klettelemente 56, 57 aus Kunststoff, bspw. Nylon, und damit elastisch, erlauben also - geringfügige - Relativbewegungen zwischen Gehäuse 53 und Gegenstand 58. Schlägt nun eine Person bspw. als Folge einer Gemütsregung gegen den Computermonitor 58, so gerät dieser in Schwingungen und/oder verschwenkt leicht um ein Gelenk im Bereich seines Standfußes 59. Diese Vibrationen oder die Bewegung übertragen sich auf das daran befestigte Gehäuse 53, wobei die Klettelemente 56, 57 einerseits die Schwingungen des Computermonitors 58 verstärken können; andererseit ein (bedämpftes) Nachschwingen des Gehäuses 53 erlauben. Demnach wird jeder auf den Computermonitor 58 einwirkende, mechanische Einfluß an dem Gehäuse 53 eine deutlich wahrnehmbare Schwingung hervorrufen.

In dem Gehäuse 53 kann sich ein Beschleunigungssensor oder ein sonstiger, speziell für die Erfassung von Schwingungen entwickelter Vibrationssensor befinden sowie eine Auswerteschaltung für dessen Ausgangssignal, die bspw. von einer Batterie gespeist wird. Die Auswerteschaltung kann nach dem in Fig. 4 dargestellten Prinzip arbeiten, um die maximale Amplitude der Beschleunigung bzw. Schwingung zu erkennen und in einen von mehreren Amplitudenbereichen einzuklassifizieren. Anhand des solchermaßen gefundenen Amplitudenbereichs wird sodann eine von mehreren, abgespeicherten Tonsequenzen ausgewählt und über einen eingebauten Lautsprecher 60 abgestrahlt.

Außerdem kann jedem Amplitudenbereich nach der Größe seiner Grenzamplituden aufsteigend sortiert eine Ordnungszahl α zwischen 1 und der Gesamtzahl aller Amplitudenbereiche zugeordnet werden. Ferner sind in dem Gehäuse 53 mehrere in einem Balken nebeneinander angeordnete Leuchtmittel, insbesondere Leuchtdioden 61, vorgesehen. Zur Anzeige der Stärke einer äußeren Einwirkung können nun jedem Amplitudenbereich bzw. jeder Ordnungszahl α ein oder mehrere dieser Leuchtdioden 61 zugeordnet und vorübergehend angesteuert werden, bspw. nach Art einer balkenförmigen Leistungsanzeige.

## Patentansprüche

1. Ortsfest betreibbares Gerät, insbesondere Elektrogerät wie bspw. ein Computer, mit wenigstens einem Gehäuse (1;40;53), einer Einrichtung zur Wiedergabe von Tönen, insbesondere einem Lautsprecher, und mit einem an dem Gerät angeordneten Sensor für die Sensierung äußerer Einflüsse, welcher mit der Tonwiedergabeeinrichtung derart gekoppelt ist, dass äußere, auf das Gerät, insbesondere auf dessen Gehäuse (1;40;53), einwirkende Einflüsse eine Veränderung der Tonwiedergabe herbeiführen, **gekennzeichnet durch** die folgenden Merkmale:
a) das Gehäuse (1;40;53) ist mit wenigstens einem Standfuß (6), mit dem eigentlichen Gerät (50), insbesondere dessen Chassis, und/oder mit einem sonstigen Gegenstand (58), bspw. einem Möbel oder einem Türblatt, gekoppelt (2;44) oder koppelbar, derart, dass das Gehäuse (1;40;53) unter einem äußeren, insbesondere mechanischen Einfluß, der auf das Gehäuse (1;40;53) selbst oder den dieses lokalisierenden Gegenstand (58) einwirkt, aus seiner ortsfesten Ausgangslage ausweichen kann;
b) das Gehäuse (1;40;53) ist mit einer Rückführeinrichtung (27) und/oder einer Stabilisierungseinrichtung (56,57;59), bspw. einer Einrichtung zur Dämpfung von Schwingungen, versehen oder gekoppelt oder koppelbar, die bestrebt ist, dieses nach Wegfall äußerer Einflüsse in eine stabile Position zu bewegen und/oder lagemäßig zu stabilisieren;
c) der Sensor ist zur Erfassung einer Auslenkung x des Gehäuses (1;40;53) aus dessen ortsfester Ausgangslage, und/oder zur Erfassung der Geschwindigkeit v = dx/dt der Auslenkung x und/oder deren Beschleunigung a = d²x/dt² und/oder einer dazu proportionalen Größe, insbesondere einer auf das Gehäuse (1;40;53) ausgeübten Kraft F = m*a, ausgebildet.

2. Gerät nach Anspruch 1, **dadurch gekennzeichnet, dass** die Kopplung (2;44;56,57) des Gehäuses (1;40;53) formschlüssig ineinander greifende Elemente aufweist, bspw. Klettverschlüsse, Druckknöpfe, Häken, etc.

3. Gerät nach Anspruch 1 oder 2, **dadurch gekennzeichnet, dass** die Kopplung (2;44;56,57) des Gehäuses (1;40;53) an mit einem Standfuß (6), mit dem eigentlichen Gerät (50) und/oder mit einem sonstigen Gegenstand (58) beweglich ausgestaltet ist.

4. Gerät nach Anspruch 3, **dadurch gekennzeichnet, dass** die bewegliche Kopplung (2;44) des Gehäuses (1;40) ein oder mehrere Linearführungselemente (15-19;45,46) umfaßt.

5. Gerät nach Anspruch 3 oder 4, **dadurch gekennzeichnet, dass** die bewegliche Kopplung (2;44) des Gehäuses (1;40) ein oder mehrere Anschlagelemente (5,6;18,19;47,48) aufweist, um den Bewegungsspielraum zu begrenzen.

6. Gerät nach einem der vorhergehenden Ansprüche, **dadurch gekennzeichnet, dass** die Rückführ- oder Stabilisierungseinrichtung des Gehäuses (1;40;53) ein oder mehrere Feder- oder Dämpfungselemente (27;56,57) aufweist, um das Gehäuse (1;40;53) in von äußeren Kräften freiem Zustand an eine definierte Position zu bewegen oder stillzusetzen.

7. Gerät nach einem der vorhergehenden Ansprüche, **dadurch gekennzeichnet, dass** der Sensor als Beschleunigungssensor ausgebildet und in oder an dem beweglichen Gehäuse (1;40) angeordnet ist.

8. Gerät nach einem der vorhergehenden Ansprüche, **dadurch gekennzeichnet, dass** der Sensor als Kraft- oder Drucksensor ausgebildet und an der beweglichen Kopplung (2;44) des Gehäuses (1;40) angeschlossen ist.

9. Gerät nach einem der vorhergehenden Ansprüche, **dadurch gekennzeichnet, dass** der Sensor als Meßeinrichtung für die Spannkraft oder Auslenkung eines oder mehrerer Federelemente (27) der beweglichen Kopplung (2;44) des Gehäuses (1;40) ausgebildet ist.

10. Gerät nach einem der vorhergehenden Ansprüche, **dadurch gekennzeichnet, dass** der Sensor ein kontinuierliches Ausgangssignal erzeugend ausgebildet ist.

11. Gerät nach einem der vorhergehenden Ansprüche, **dadurch gekennzeichnet, dass** an dem Sensor eine Auswerteschaltung angeschlossen ist, um den Maximalwert uₘₐₓ des Ausgangssignalverlaufs u innerhalb eines Zeitintervalls zu ermitteln.

12. Gerät nach einem der vorhergehenden Ansprüche, **dadurch gekennzeichnet, dass** die Auswerteschaltung derart ausgebildet ist, dass ein gefundener Maximalwert uₘₐₓ nach seiner Amplitude einem von mehreren Amplitudenbereichen zugeordnet wird, um je nach dem zugeordneten Amplitudenbereich unterschiedliche Tonsequenzen aus einem Speicher auszulesen und über einen Lautsprecher hörbar zumachen (37,38)

13. Verfahren zum Betrieb eines Geräts nach einem der vorhergehenden Ansprüche, **dadurch gekennzeichnet, dass** die Beschleunigung und/oder Schwingungen des Gehäuses (1;40;53) und/oder die auf dieses ausgeübte Kraft gemessen wird, und dass in Abhängigkeit von den gemessenen Werten unterschiedliche Tonsequenzen wiedergegeben werden.

14. Verfahren nach Anspruch 13, **dadurch gekennzeichnet, dass** der Maximalwert des Ausgangssignalverlaufs innerhalb eines Zeitintervalls ermittelt wird, und dass ein gefundener Maximalwert nach seiner Amplitude einem von mehreren Amplitudenbereichen zugeordnet wird.

15. Verfahren nach Anspruch 14, **dadurch gekennzeichnet, dass** je nach dem zugeordneten Amplitudenbereich unterschiedliche Tonsequenzen aus einem Speicher ausgelesen und über einen Lautsprecher (60) hörbar gemacht (37,38), und ggf. unterschiedliche oder eine unterschiedliche Anzahl von optischen Signalelementen, insbesondere Leuchtmitteln (61), aktiviert werden.
